# EUROPEAN PATENT APPLICATION

(11) **EP 1 992 252 A1**
(43) Date of publication of application: **19.11.2008**
(21) Application number: 07425285.9
(22) Date of filing: 16.05.2007
(51) Int. Cl.: A47B 47/00, F16B 7/02

(54) **Interconnection device for modular pieces of furniture**

(71) Applicant: Arthema Group S.r.l., 20040 Aicurzio ( Milano) (IT)
(72) Inventor: Belardinelli, Roberto, 47900 Rimini (IT)
(74) Representative: Leihkauf, Steffen Falk

(57) **Abstract**

A device (1) for interconnecting components (2) for modular pieces of furniture, particularly shelvings, comprises a connecting body (3), at least two tie rod members (4) having a rear portion (5) either connectable or connected to one of these components (2), and a front portion (6) adapted to be received within a corresponding tie rod seat (7) of the connecting body (3), at least one threaded clamping member (9) adapted to be screwed within a corresponding threaded clamping seat (10) formed within the connecting body (3). Such a clamping member (9) forms an engaging portion (11) adapted to simultaneously engage at engaging seats (12) formed in the front portions (6) of at least two of the tie rod members (4). Furthermore, the tie rod seat (7) and the clamping seats (10) are configured so that, in response to a screwing of the clamping member (9) within the clamping seat (10), the engaging portion (11) drags the tie rod members (4) with their rear portion (6) approaching said connecting body (3).

## Description

It is the object of the present invention a device for interconnecting components of modular pieces of furniture, particularly of modular shelvings.

Frames of modular shelvings are assemblable by mutually interconnecting, through special interconnection devices, a plurality of components, particularly cross elements and vertical support elements, which are usually at least partially tubular. These components, commonly of a standard type, are provided in a restricted and predefined number of shapes and sizes.

Since these shelvings, once assembled, must be able to support high loads, the interconnection devices are required to ensure a resistant and reliable connection between the interconnected components.

To this aim several solutions have been proposed.

A first solution consists in carrying out the connection between the interconnection device and each component to be connected by providing the same device with a relief connecting portion to be inserted at a connection seat of the component to be connected, usually formed at a tubular end thereof. The hold of the connection is achieved by interference. However, since the assembly of the components is usually carried out manually, in order that the force required to the user for the assembly is not too high, such interference is low and, therefore, the connection can result not suitably resistant.

In order to overcome such a drawback, some known interconnection devices are provided with wedge-shaped connection portions which are adapted to expand expandable elements within the connecting seats of the components to be connected.

For example, US 4,921,370 discloses a device for the transversal interconnection of tubes which comprises a frusto-conical element and an expandable element which, following a forcing action on the outer surface of the frusto-conical element, expands against the inner surface of a first one of the tubes to be connected. The thrust of the expandable element on the frusto-conical element is achieved by screwing a screw within a nut fixed within a seat formed inside the expandable element. The force of reaction on the screw is ensured by a second one of the tubes to be connected, on the outer surface of which the screw head abuts. Such a solution, while ensuring a high resistance of the connection between the two tubes, has however the drawback to need the processing, particularly the drilling, of the second one of the two tubes to be interconnected, since the screw must transversally pass therethrough.

Accordingly, it is the object of the present invention to provide an interconnection device for components of modular pieces of furniture, particularly of vertical support elements and cross elements of modular shelvings, which ensures a high resistance and safety of the connections while overcoming at least some of the drawbacks of the known solutions.

These and other objects are achieved through an interconnection device according to claim 1 and a modular shelving according to claim 19.

In order to better understand the invention and appreciate the advantages thereof, some exemplary, though non-limiting embodiments thereof will be described herein below, with reference to the annexed Figures, in which:

Figure 1 is a perspective view of an interconnection device according to the invention;

Figure 2 is a sectional view taken along the plane X in Figure 1 of the interconnection device in Figure 1 in a particular condition of use;

Figure 3 is an exploded, perspective view of the interconnection device in Figure 2;

Figures 4a and 4b are perspective views, in an assembled and disassembled configuration, respectively, of a detail of the interconnection device in Figure 1;

Figures 5a and 5b are perspective views of a detail and of a portion of this detail, respectively, of the interconnection device according to a further embodiment of the invention;

Figures 6a and 6b are perspective views of a detail and of a portion of this detail, respectively, of the interconnection device according to a further embodiment of the invention;

Figures 7a and 7b are perspective views of a detail and of a portion of this detail, respectively, of the interconnection device according to a further embodiment of the invention;

Figures 8a and 8b are perspective views of a detail and of a portion of this detail, respectively, of the interconnection device according to a further embodiment of the invention;

Figures 9a and 9b are perspective views, in an assembled and disassembled configuration, respectively, of a detail of the interconnection device according to a further embodiment of the invention;

Figures 10a and 10b are perspective views, in an assembled and disassembled configuration, respectively, of a detail of the interconnection device according to a further embodiment of the invention;

Figure 11 is a perspective view of an interconnection device according to a further embodiment of the invention;

Figure 12 is a sectional view taken along the plane Y of Figure 11 of the interconnection device in Figure 11 in a particular condition of use;

Figure 13 is an exploded, perspective view of the interconnection device in Figure 12;

Figures 14a and 14b are perspective views, in an assembled and disassembled configuration, respectively, of a detail of the interconnection device in Figure 11;

Figures 15a and 15b are perspective views, in an assembled and disassembled configuration, respectively, of a detail of the interconnection device according to a further embodiment of the invention;

Figures 16a and 16b are perspective views, in an assembled and disassembled configuration, respectively, of a detail of the interconnection device according to a further embodiment of the invention;

Figures 17a and 17b are perspective views, in an assembled and disassembled configuration, respectively, of a detail of the interconnection device according to a further embodiment of the invention;

Figures 18a and 18b are perspective views of a detail and of a portion of this detail, respectively, of the interconnection device according to a further embodiment of the invention;

Figures 19a and 19b are perspective views, in an assembled and disassembled configuration, respectively, of the interconnection device according to a further embodiment of the invention;

Figures 20a and 20b are perspective views of a detail and of a portion of such a detail, respectively, of the interconnection device according to a further embodiment of the invention;

Figures 21a and 21b are a perspective view and a side view, respectively, of a further detail of the interconnection devices in Figure 1 and in Figure 11;

Figures 22a and 22b are a perspective view and a side view, respectively, of a further detail of the interconnection device in Figure 1;

Figure 22c is a sectional view, taken along the line A-A of Figure 22b, of the detail of the interconnection device in Figure 22b;

Figures 23a and 23b are a perspective view and a side view, respectively, of a further detail of the interconnection device in Figure 11;

Figure 23c is a sectional view, along the line B-B of Figure 23b, of the detail of the interconnection device in Figure 23b.

With reference to the Figures, a device for interconnecting at least two components 2 of modular pieces of furniture is designated with numeral 1. For example, the components 2 can be cross elements and/or vertical support elements of modular shelvings.

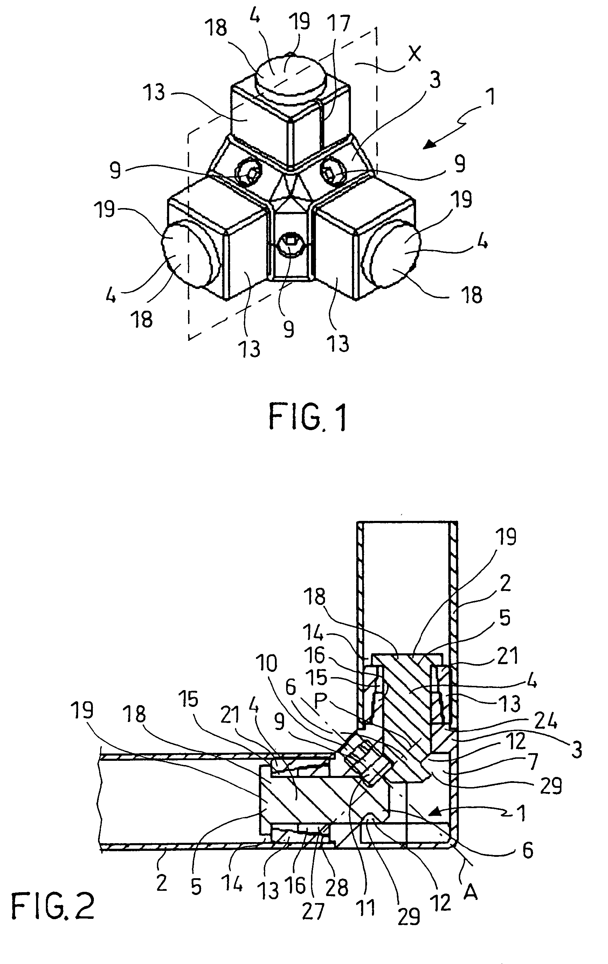

The device 1 comprises a connecting body 3 and at least two tie rod members 4, preferably a tie rod member 4 for each of the components 2 to be interconnected through the device 1 itself, having a rear portion 5, which is, or which can be connected to one of the components 2, and a front portion 6 which is adapted to be received in a tie rod seat 7 of the connecting body 3 (Figures 1, 2; 11, 12). Preferably, the tie rod seat 7 is formed within the connecting body 3 and is in communication with the outside of the device 1 through openings 8, such as to allow the at least partial insertion of the tie rod members 4 within the tie rod seat 7.

The interconnection device 1 further comprises at least one threaded clamping member 9 which is adapted to be screwed within a corresponding clamping seat 10, also threaded, formed in the connecting body 3. The clamping member 9 forms an engaging portion 11 adapted to simultaneously engage engaging seats 12 formed in the front portions 6 of at least two of the tie rod members 4.

Advantageously, the tie rod seat 7 and the clamping seats 10 of the connecting body 3 are configured so that, in response to a screwing of the clamping member 9 within the clamping seat 10, the engaging portion 11 of the clamping member 9 drags the at least two tie rod members 4 with their rear portion 5 approaching the connecting body 3.

Thereby, a high resistance of the connection between the tie rod members 4 and the connecting body 3 is ensured. In fact, in order to disengage the tie rod members 4, and consequently the components 2, from the connecting body 3, it is necessary to unscrew the clamping member 9, so that the engaging portion 11 thereof releases the engaging seats 12 of the tie rod members 4.

In accordance with an embodiment, the tie rod members 4 are removably connectable to each of the components 2 to be interconnected. In order to provide such a removable connection, the device 1 advantageously comprises expandable elements 13 which are adapted to abut against the connecting body 3 and to engage a corresponding connection seat 14 of the component 2. For example, in the case of modular shelvings, the connecting seats can coincide with the side ends of the through opening of cross elements or of tubular vertical support elements. The tie rod members 4 cooperate with these expandable elements 13 so that the expandable elements 13 are expanded within these connecting seats 14 following the approach of the rear portions 5 of the tie rod members 4 to the connecting body 3.

The fact that the tie rod members 4 are connectable to the connecting body 3 through the clamping members 9 and to the components 2 through the expansion of the expandable elements 13 within the connecting seats 14 has the advantageous result that the connection between the interconnection device 1 and the components 2 does not require any processing of the components 2 aimed at interconnecting the same.

Furthermore, since the expansion level of the expandable elements 13 is adjustable on the basis of their proximity to the connecting body 3, and since such proximity is adjustable through the clamping member 9, which acts upon the tie rod members 4 by shifting them, it is possible to differentiate the force exerted by the expandable elements 13 within the connecting seats 14. For example, it is possible to impose a high force to an assembled piece of furniture, and a lower force, optionally null, during the assembly or disassembly operations.

Advantageously, in order that a strong hold of the expandable elements 13 is ensured in the connecting seats 14, and consequently in order that the components 2 are connected to the device 1 in a resistant manner, the expandable elements 13 define an expansion seat 15 in which expander elements 16 connectable to the connecting body 3 or, preferably, formed as one piece therewith can be at least partially inserted.

The expansion seats 15 of the expandable elements 13, and the expander elements 16 can have several shapes suitable to provide this expansion of the expandable elements 13 within the expansion seats 15.

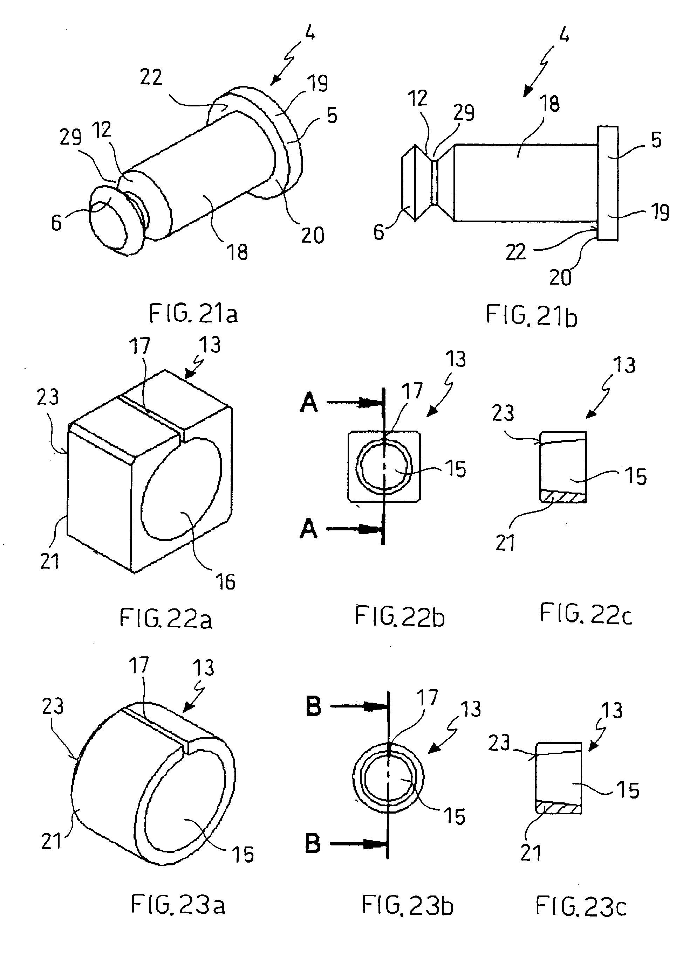

In accordance with an embodiment, the expansion seats 15 and the expander elements 16 comprise cooperation portions 27 and 28, respectively, having gradually decreasing radial dimensions adapted to cooperate with each other, for example substantially frusto-conical-shaped portions (Figures 2, 22c; 12, 23c). Thereby, the expander elements 16 can be wedged within the expansion seats 15, thus facilitating the gradual expansion of the expandable elements 13 inside the connecting seats 14 of the components 2 during such wedging. Advantageously, the cooperation portions 27 of the expander elements 16 have radial dimensions which gradually decrease towards the outside of the connecting body 3, so that this wedging occurs after the expandable elements 13 move close to the latter. This configuration of the cooperation portions 27 and 28 of the expansion seats 15 and expander elements 16 has the further advantage of ensuring an uniform expansion of the expandable elements 13 inside the connecting seats 14 of the components 2. Thereby, any residual radial clearance is almost eliminated between the expandable elements 13 and components 2 after the interconnection has been completed. In other words, a substantial self-centering of the components 2 relative to the interconnection device 1 is ensured.

The expandable elements 13 can further have structural weakening elements in order to facilitate their expansion in the connecting seats 14. For example, the expandable elements can comprise a notch 17 adapted to increase the radial deformability thereof.

In accordance with an embodiment, the tie rod members 4 comprise pins 18, preferably, though not necessarily, having a substantially axial-symmetrical shape, adapted to be inserted from the outside of the device 1 within the tie rod seats 7 formed in the connecting body 3 (Figures 2, 12; 21a, 21b).

Advantageously, the engaging seats 12 comprise an abutment stop against which the engaging portion 11 of the clamping member 9 can abut.

In accordance with an embodiment, the engaging seats 12 comprise a groove 29 formed in the front portion 6 of the pin 18, preferably shaped such as to provide an at least partial shape-contact with the front portion 11 of the pin 6. For example, such a groove 29 can be substantially V-shaped, preferably with an opening substantially of 90°, such as to be able to receive flat-headed threaded members.

Advantageously, the grooves 29 of the at least two pins 18 which are engaged by the same clamping member 9 are located such as to define, together, when the device 1 is assembled, a common abutment plane P against which the engaging portion 11 of the clamping member 9 can abut. With further advantage, the clamping seat 10 is oriented such as one axis A thereof is substantially orthogonal to this plane P and that, preferably, forms the bisecting line of the angle defined by the axes of pins 18. Such a configuration is particularly advantageous in the case where the two pins 18 are substantially orthogonal to each other. Thereby, in fact, the clamping member 9, during the screwing within the clamping seat 10, exerts forces on the pins 18 having substantially equal tangential components, thus producing a substantially even approach movement by the pins 18 to the connecting body 3. Consequently, following this screwing, a substantially uniform expansion of the expandable elements 13 will occur in the connecting seats 14 of the components 2.

Advantageously, the grooves 29 develop circumferentially in the front portion 6 of the pins 18, so that the engagement of the clamping member 9 therein is ensured in any angular position taken by each pin 18 about its own axis.

With further advantage, in order to provide the above-mentioned dragging of the expandable element 13 while approaching to the connecting body 3, the pins 18 comprise, at the rear portion 5 thereof, a head 19, at least partially radially projecting towards the outside of the pin 18, such as to form a dragging seat 20 adapted to receive a corresponding dragging portion 21 of the expandable element 13. Such a dragging seat 20 of the pin 18 comprises an inner abutment surface 22 adapted to abut against a corresponding outer abutment surface 23 of the dragging portion 21 of the expandable element 13. Thereby, the approach of the pin 18 to the connecting body 3 results in the expandable elements 13 being dragged while approaching to the connecting body 3. Consequently, as the pin 18 is being moved closer to the connecting body 3, an operation which can be carried out by screwing the clamping member 9 within the clamping seat 10, the expandable element 13, dragged by the head 19 of the pin 18, will gradually expand within the connection seat 14 of the component 2.

Preferably, the head 19 of the pins 18 is of a substantially axialsymmetric shape and, still more preferably, it is substantially coaxial to the same pin 18, such as to exert a substantially uniform force on the dragging portions 21 of the expandable elements 13.

In accordance with an embodiment, the tie rod seats 7 of the connecting body 3 are at least partially defined by the expander elements 16 and the above-mentioned openings 8 of the connecting body 3 are formed at the outer ends of these expander elements 16. The insertion of the pins 18 from the outside in the connecting body 3 in the tie rod seats 7 can therefore occur via the openings 8 of the expander elements 16.

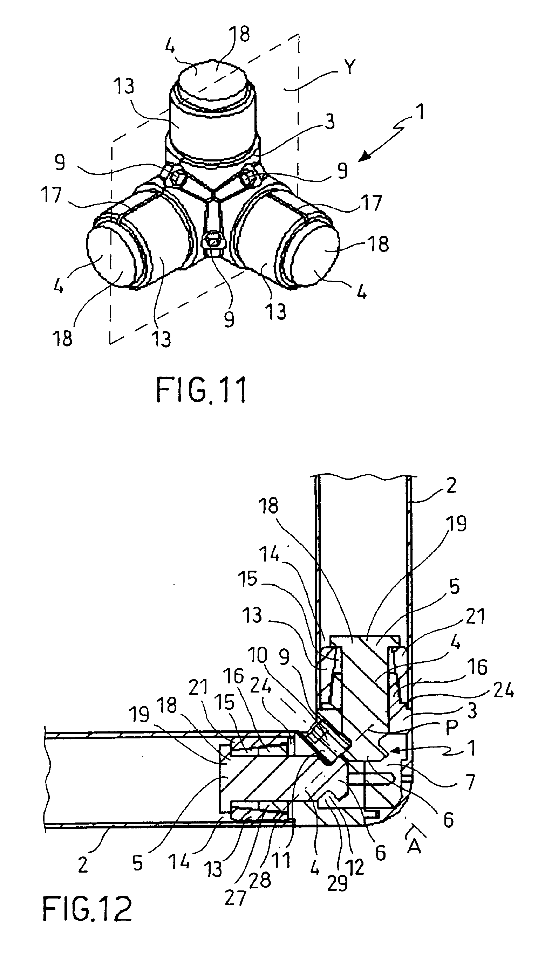

In order to reduce the overall dimensions, the device 1 is preferably configured so as that, at each connection area between one of the components 2 and the connecting body 3, under assembly conditions, the expandable element 13 and the corresponding expander element 16, component 2 to be connected, and pin 18 are substantially coaxial (Figures 2; 12).

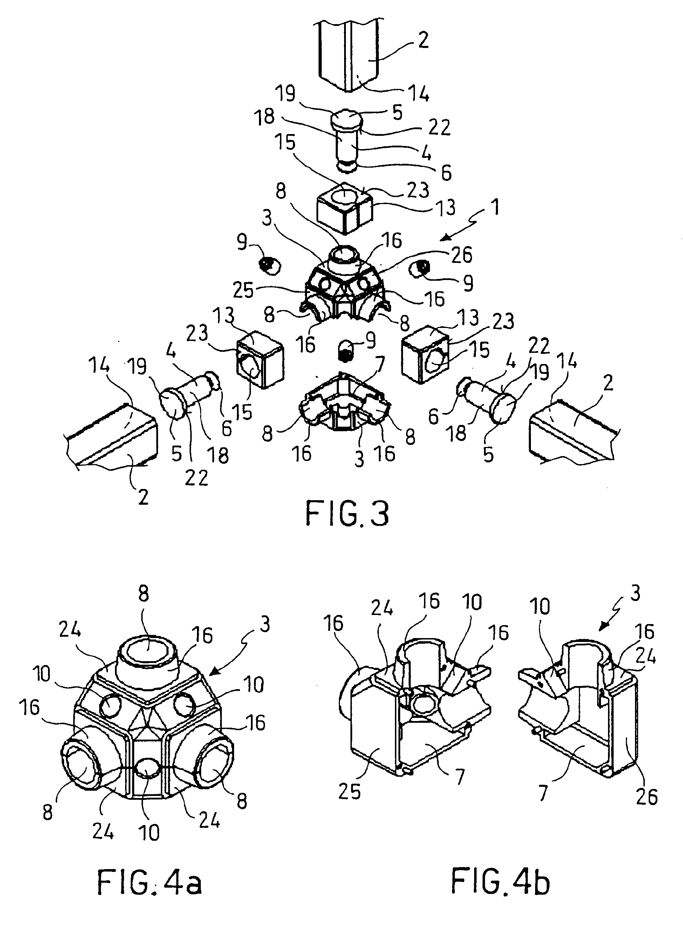

Advantageously, the connecting body 3 comprises centering supports 24 which act as an aid for the positioning of the components 2 to be connected relative to the connecting body 3 (Figures 4-10; 14-20). These centering supports 24 are adapted to carry out an at least partial shape-contact with the connecting seats 14 of the components 2. Preferably, the centering supports 24 project towards the outside of the connecting body 3, such as to be able to be inserted in the connecting seats 14 of the components 2. Still more preferably, the centering supports 24 are substantially complementary to these connecting seats 14. For example, in the case of components 2 having a squared connection seat, the presence of the centering supports 24, also preferably squared, ensures the correct positioning of the components 2 relative to the connector 3, since the sole correct positions, four in the specific example, are those in which the centering supports 24 can be inserted in the connection seat 14.

The so shaped clamping supports 24 have the further advantageous function of constraints against the shear forces which the components 2, for example the cross elements of shelvings can be subjected to.

With further advantage, the clamping supports 24 are adapted to exert friction forces in the connecting seats 14. Thereby, further constraints are imposed to the components 2, particularly constraints against the bending moment and the axial forces.

The interconnection device 1 according to the invention can be advantageously used to interconnect components 2 having several configurations.

In accordance with an embodiment, the device 1 is shaped such as to be able to interconnect components 2 which comprise tubular portions having, in the cross-sections thereof, substantially squared inner and, optionally, also outer profiles (Figures 1-10b, 13a-c). In such a case, the connecting body 3 is preferably substantially cube- or parallelepiped-shaped and, still more preferably, the expander elements 16 are located either on some or all the faces of this cube or parallelepiped. Thereby, it is possible to provide a shape continuity for the assembled structure also at the interconnection areas between the components 2.

Furthermore, in accordance with what has been described above, in such a configuration the expandable elements 13 have, as they are required to be inserted within squared-profiled connecting seats 14, a cross-sectional preferably substantially squared outer profile. Similarly, the centering supports 24 also have a preferably substantially squared contour.

In accordance with a further embodiment, the device 1 is shaped such as to be able to interconnect components 2 comprising tubular portions having cross-sectional substantially circular inner and, optionally, also outer profiles. In such a case, the connecting body 3 is preferably shaped as one or more mutually intersected cylinders, the ends thereof, still more preferably, forming the expander elements 16 (Figures 11-20b, 23a-c).

Furthermore, in view of what has been previously described, in such a configuration the expandable elements 13 also have, as they are required to be inserted in circular-profiled connecting seats 14, a cross-sectional preferably substantially circular outer profile. For similar reasons, also the centering supports 24 have a preferably substantially circular contour.

The interconnection device 1 according to the invention can be further used to interconnect more than two components 2. In this case, the device 1 is advantageously provided with clamping members 9, as well as with clamping seats 10 such that each pin 18 housed in the tie rod seats 7 is engaged by at least one of the clamping members 10. As can be understood by the following examples, in the configurations of the device 1 adapted to interconnect more than two components 2, some of the pins 18 can be simultaneously locked by more than one clamping member 10.

By way of example only, the device 1 can be shaped such as to be able to connect:

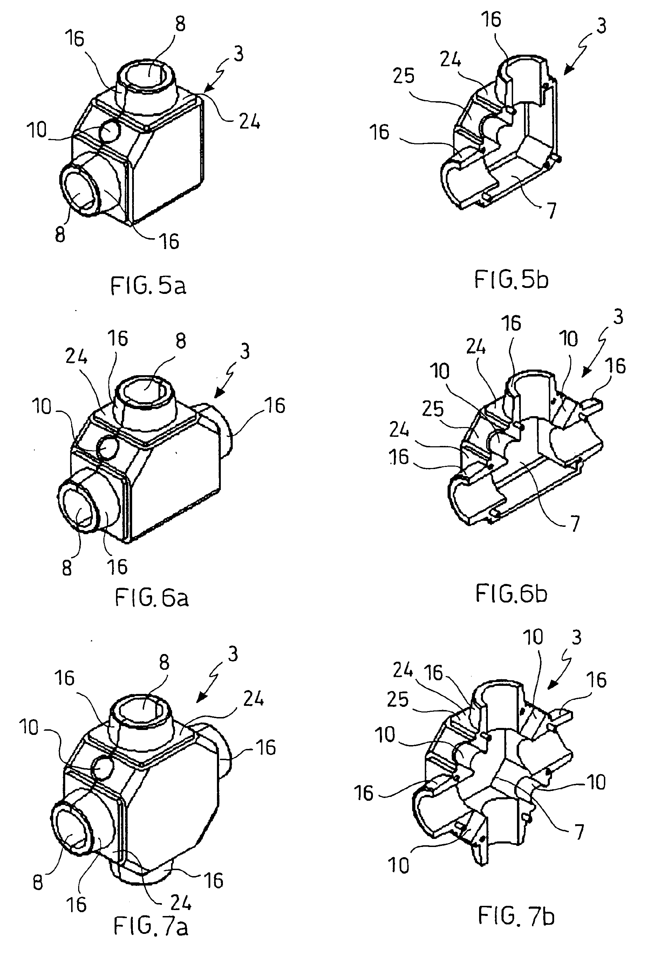

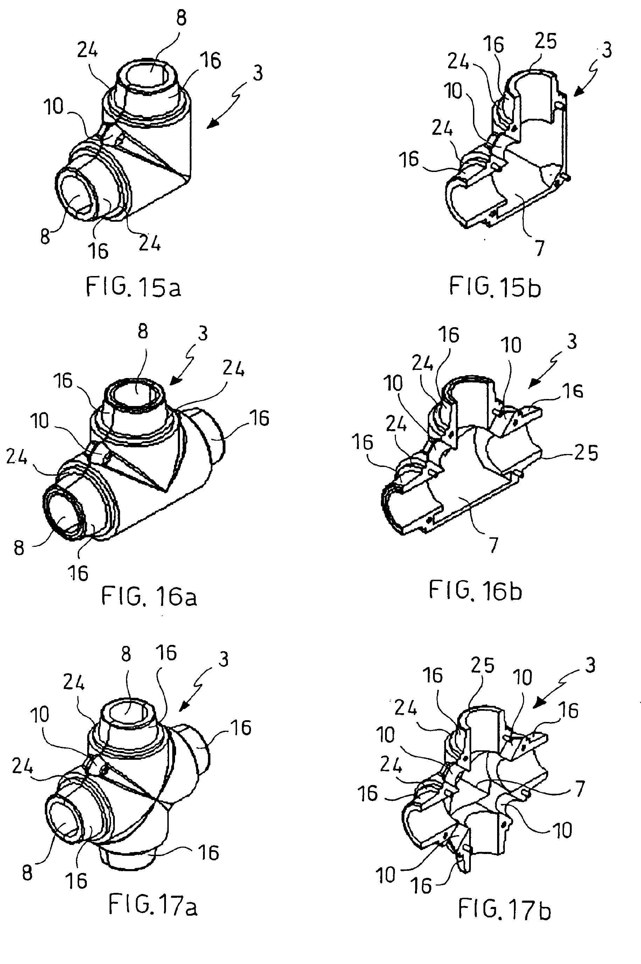

- two consecutive components 2 mutually arranged at a substantially right angle (Figures 5a, 5b; 15a, 15b). In such a configuration an individual clamping seat 10 is preferably provided;

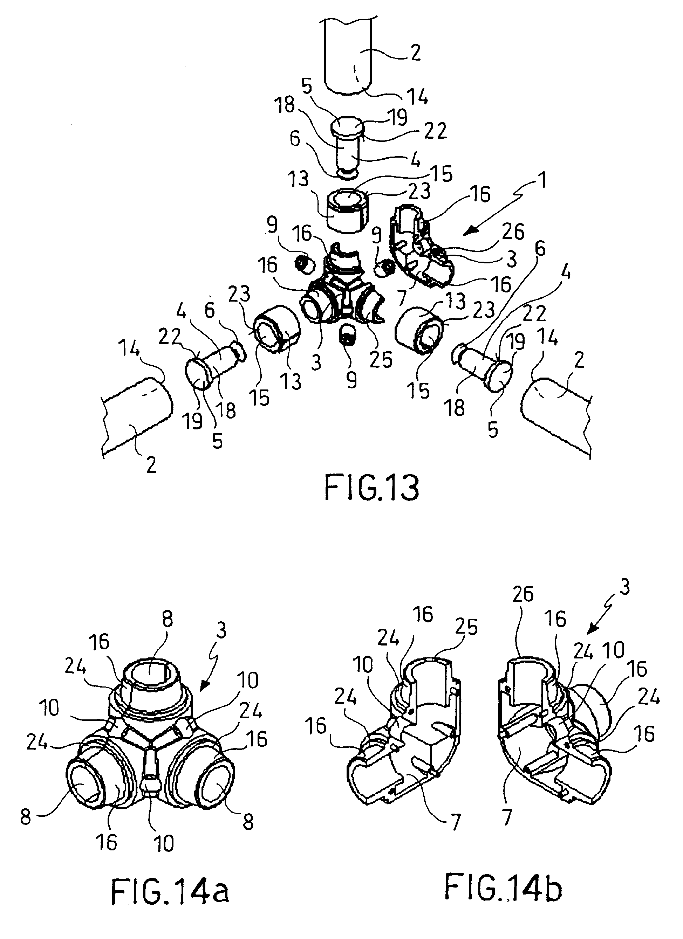

- three components 2 disposed in pairs of components orientated at a substantially right angle one to the other, in which these pairs of components lay on the whole in a same plane (Figures 6a, 6b; 16a, 16b) or in mutually orthogonal planes (Figures 4a, 4b; 14a, 14b). In these circumstances, two and three clamping seats 10, respectively, are preferably provided, particularly one for each pair of consecutive components 2 to be connected;

- four components 2 sequentially mutually arranged at a substantially right angle one to the following one, laying in a same plane (Figures 7a, 7b; 17a, 17b). In such a case four clamping seats 10 are preferably provided, particularly one for each pair of consecutive components 2 to be interconnected;

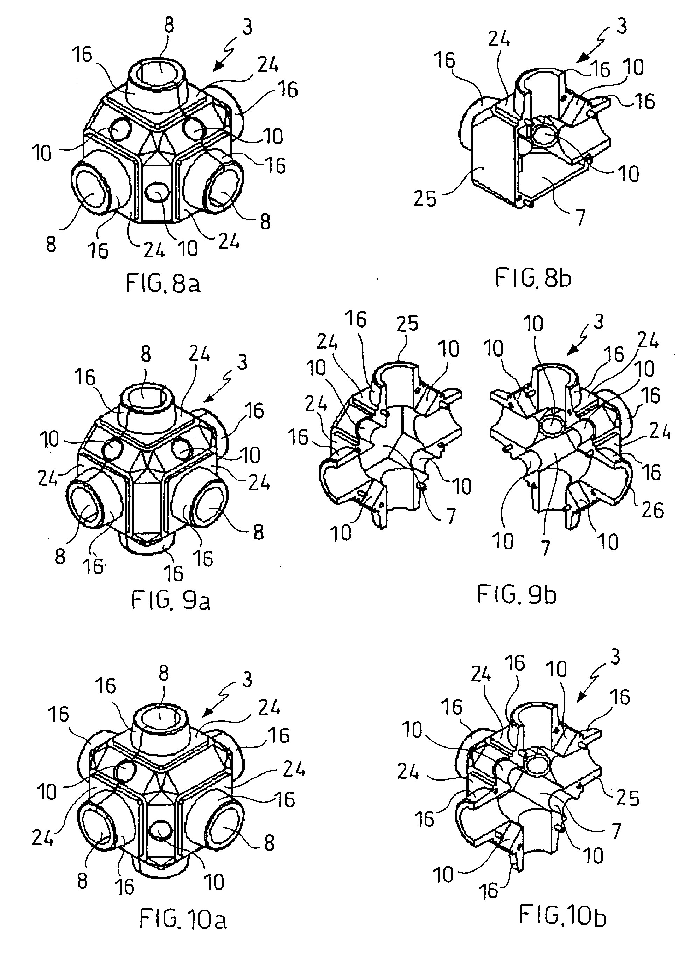

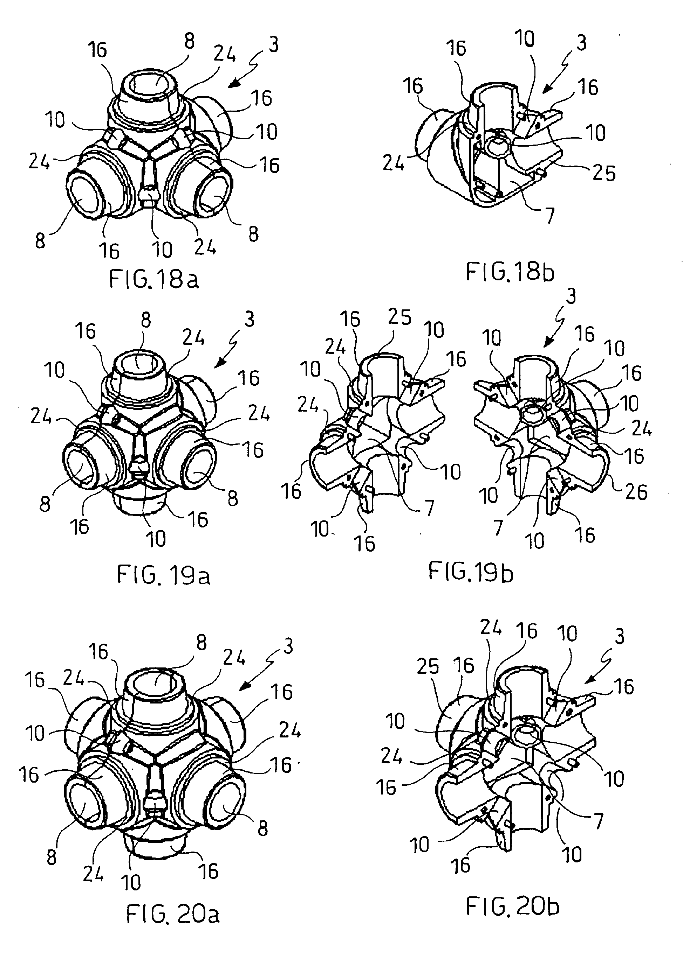

- four components 2 being mutually arranged in pairs of components orientated at a substantially right angle one to the other, in which these pairs of components lay on the whole in mutually orthogonal planes (Figures 8a, 8b; 18a, 18b). In such a case, five clamping seats 10 are preferably provided, particularly one for each pair of consecutive components 2 to be interconnected;

- five components 2 arranged in pairs of components orientated at a substantially right angle one to the other, in which these pairs of components lay on the whole in mutually orthogonal planes (Figures 9a, 9b; 19a, 19b). In such a case, five clamping seats 10 are preferably provided;

- six components 2 sequentially mutually arranged at a substantially right angle one to the following one, laying in different mutually orthogonal planes (Figures 10a, 10b; 20a, 20b). In such a case, six clamping seats 10 are preferably provided.

The connecting body 3 according to any embodiment thereof can be either provided as one piece, or, alternatively, in two half-shells 25 and 26 movably connectable one to the other, for example via press-connection. The connecting body 3 formed by two half-shells advantageously has a high ease of processing.

The connecting body 3 and the expandable elements 13 of the device 1 are preferably made of zama alloy. Furthermore, the pins 18 are preferably made of steel, for example C40 steel.

Some possible modes of assembling and disassembling a shelving provided with the interconnection device according to the invention will be now described.

With reference, for example, to the embodiment set forth in the Figures 2 and 3, the assembly of each component 2 to the interconnection device 1 can be carried out in the following manner. The expandable elements 13 are abutted against the connecting body 3, so that the expander elements 16 of the connecting body 3 are inserted within the respective expansion seats 15 of the expandable elements 13. The pins 18 are inserted within the tie rod seat 7 of the connecting body 3 through the expansion seats 15 of the expandable elements 13 and through the openings 8 of the connecting body 3. During such an insertion, the heads 19 of the pins 18 drag the expandable elements 13 approaching to the connecting body 3, thus causing a first partial expansion thereof. Then, the clamping members 9 are partially screwed in the clamping seats 10, so that these engage the engaging seats 12 of the pins 18 and further approach the latter to the connecting body 3, thus causing a further expansion of the expandable elements 13. At this stage, it is possible to connect the components 2 to the device by inserting the expandable elements 13, which are already partially expanded, within the connecting seats 14 of the components 2. A further screwing action by the clamping members 9 produces a further approach of the pins 18 to the connecting body 3 and therefore a further expansion of the expandable elements 13 within the connecting seats 14 of the components 2, which are thus locked to the device 1. It should be noted that, due to the effect of the approach of the pins 18 to the connecting body 3 also the components 2 are approached to the connecting body 3. Therefore, after the assembly has been,completed, the components 2 result to be forced against the connecting body 3, particularly against the centering supports 24. Thereby, high resistance to the bending moment is provided at the connection area between the component 2 and the connecting body 3. Furthermore, high axial positioning accuracy of the components 2 to the device 1 is ensured. This aspect is particularly advantageous, for example, in the case of an assembled modular shelving, in which it is important that all the devices 1 being present ensure narrow and, on the whole, uniform assembly tolerances throughout the shelving.

For the disassembly of the components 2 it is sufficient to partially unscrew the clamping member 9 such as to allow a partial escape of the pin 18 from the tie rod seat 7, thus reducing the expansion degree of the expandable elements 13 in the connecting seats 14. Therefore, simply by partially unscrewing the clamping member 9, it is possible to substantially reduce the force needed to disengage the components 2 from the device 1. It should be noted that such a disassembly operation has the further advantage that the device 1 disassembly is not required, which device remains ready for a new assembly operation.

If required, however, it is possible to unscrew the clamping members 9 completely from the clamping seats 10, so that the latter release the engaging seats 12 of the pins 18, and that it is possible to separate the pins 18 and the expandable elements 13 from the connecting body 3.

According to a further aspect of the invention, a device is provided for interconnecting a connecting body 3 and a component 2 of modular pieces of furniture, particularly shelvings. Such a device 1 comprises the connecting body 3 itself and a tie rod member 4 having a rear portion 5 either connectable or connected to the component 2, and a front portion 6 adapted to be received in a corresponding tie rod seat 7 of the connecting body 3. Furthermore, the device 1 comprises at least one threaded clamping member 9 adapted to be screwed within a corresponding threaded clamping seat 10 formed in the connecting body 3. Such a clamping member 9 forms an engaging portion 11 adapted to engage one or more engaging seats 12 formed in the front portion 6 of the tie rod member 4. The tie rod seat 7 and the clamping seat 10 are configured so that, in response to a screwing of the clamping member 9 within the clamping seat 10, this engaging portion 11 drags the tie rod member 4 with the rear portion 6 thereof approaching to the connecting body 3.

The connecting body 3, tie rod member 4, tie rod seat 7, clamping member 9, clamping seat 10, and engaging seats 12 can be configured according to any embodiment described above.

Advantageously, the connecting body 3 of this device for interconnecting a connecting body and a component of modular pieces of furniture is either connectable with or is an accessory of the modular piece of furniture, for example a plug or a foot.

From the description set forth above, those skilled in the art will be able to appreciate how the interconnection device according to the invention overcomes the major drawbacks of the interconnection devices cited with reference to the prior art.

Particularly, those skilled in the art will be able to appreciate how the interconnection device allows carrying out connections between components of modular pieces of furniture, particularly between vertical support elements and/or cross elements of modular shelvings, without requiring a specific processing on the same.

Furthermore, those skilled in the art will be able to appreciate how the interconnection device is easily adaptable to variously sized components to be interconnected. In fact, it is possible to simply replace the expandable elements with further expandable elements with dimensions suitable to the components, without having to make alterations to the connecting body, which remains the same.

Thanks to such an advantageous feature, the interconnection device can be further used to interconnect components having different dimensions relative to each other. It will simply be sufficient to use expandable elements with different dimensions on a same connecting body.

Furthermore, those skilled in the art will be able to appreciate how the interconnection device provides resistant connections between the components of the modular piece of furniture and the device. In fact, since the clamping members are engaged within the engaging seats, the tie rod members are prevented from accidentally slipping from the tie rod seats of the connecting body to which the components to be interconnected are connected/connectable.

Finally, those skilled in the art will be able to appreciate how the interconnection device allows adjusting the intensity of the connection between the components depending on the deformation degree of the expandable elements within the connecting seats, simply by screwing or unscrewing the clamping members within their seats. Therefore, it is possible to decrease such a deformation degree during the assembly or disassembly steps, so that these operations can be manually carried out without difficulty, and to increase it when the piece of furniture has been assembled and is required to support high loads.

To the above-described embodiments of the interconnection device, those skilled in the art, with the aim of meeting contingent and specific requirements, will be able to make several changes, modifications, or replacements of elements with other functionally equivalent elements, without however departing from the scope of the following claims.

## Claims

1. A device (1) for interconnecting components (2) of modular pieces of furniture, particularly shelvings, said device (1) comprising:
- a connecting body (3);
- at least two tie rod members (4) having a rear portion (5) either connectable or connected to one of said components (2), and a front portion (6) adapted to be received within a corresponding tie rod seat (7) of the connecting body (3);
- at least one threaded clamping member (9) adapted to be screwed within a corresponding threaded clamping seat (10) formed in said connecting body (3),
**characterized in that** said clamping member (9) forms an engaging portion (11) adapted to simultaneously engage engaging seats (12) formed in the front portions (6) of at least two of said tie rod members (4), and wherein said tie rod seat (7) and said clamping seats (10) are configured so that, in response to a screwing action by the clamping member (9) within the clamping seat (10), said engaging portion (11) drags the tie rod members (4) with their rear portion (6) approaching said connecting body (3).

2. The device (1) according to the preceding claim, comprising expandable elements (13) adapted to abut against said connecting body (3) and to engage a corresponding connection seat (14) of the component (2), in which said tie rod members (4) cooperate with said expandable elements (13), so that the expandable elements (13) are expanded within said connecting seats (14) following said approach by the rear portions (6) of the tie rod members (4) to the connecting body (3).

3. The device (1) according to the preceding claim, wherein said connecting body (3) comprises expander elements (16) adapted to be at least partially inserted within expansion seats (15) of said expandable elements (13) such as to provide said expansion of the expandable elements (13) within said connecting seats (14).

4. The device (1) according to the preceding claim, in which said expander elements (13) comprise openings (8) for inserting said tie rod members (4) within said tie rod seats (7) so that, following said insertion of the tie rod members (4) within the tie rod seats (7), said expander elements (16) are inserted within said expansion seats (15).

5. The device according to any claim 2 to 4, wherein said expandable elements (13) comprise a notch (17) suitable to increase their expandability within said connecting seats (14).

6. The device (1) according to any preceding claim, wherein said engaging seats (12) of the tie rod members (4) comprise grooves (29) adapted to provide an at least partial shape-contact between said engaging portion (11) of the clamping member (10) and said front portions (6) of the tie rod members (4).

7. The device (1) according to the preceding claim, wherein said grooves (29) of said at least two tie rod members (4) are shaped such as to define, together, a common abutment plane (P) against which said engaging portion (11) of the clamping member (10) can be abutted.

8. The device (1) according to the preceding claim, wherein said abutment plane (P) is substantially orthogonal to an axis (A) of said clamping seat (10).

9. The device (1) according to any preceding claim, wherein said axis (A) of said clamping seat (10) forms the bisecting line of an angle comprised between said at least two tie rod members (4) engaged by said clamping member (9).

10. The device (1) according to any preceding claim, wherein said engaging seats (12) are developed circumferentially at said front portion (6) of the tie rod members (4).

11. The device (1) according to any claim 2 to 10, wherein said tie rod members (4) form a dragging seat (20) adapted to receive a dragging portion (21) of said expandable elements (13) such as to drag and abut them against said expander elements (16), following said approach by the tie rod member (4) to said connecting body (3).

12. The device (1) according to any preceding claim, wherein said tie rod members (4) comprise substantially axialsymmetric pins (18).

13. The device (1) according to any preceding claim, wherein said connecting body (3) comprises centering supports (24) for positioning said components (2) relative to said connecting body (3), said centering supports (24) being suitable to provide an at least partial shape-contact with said connecting seats (14) of the components (2).

14. The device (1) according to the preceding claim, wherein said centering supports (24) are suitable to exert friction forces within said connecting seats (14) of the components (2).

15. The device (1) according to any preceding claim, wherein said clamping seats (10) and said tie rod seats (7) are disposed such that the engaging seats (12) of each of said tie rod members (4) can be engaged by one or more of said clamping members (9).

16. The device (1) according to any preceding claim, wherein said connecting body (3) is formed by two half-shells (25, 26), which can be removably connected to each other.

17. Device (1) for interconnecting a connecting body (3) and a component (2) of modular pieces of furniture, particularly of shelvings, said device (1) comprising:
- said connecting body (3);
- a tie rod member (4) having a rear portion (5) either connectable or connected to said component (2), and a front portion (6) adapted to be received within a corresponding tie rod seat (7) of the connecting body (3);
- at least one threaded clamping member (9) adapted to be screwed within a corresponding threaded clamping seat (10) formed in said connecting body (3),
**characterized in that** said clamping member (9) forms an engaging portion (11) adapted to engage one or more engaging seats (12) formed in the front portion (6) of said tie rod member (4), and wherein said tie rod seat (7) and said clamping seat (10) are configured such that, in response to a screwing of the clamping member (9) within the clamping seat (10), said engaging portion (11) drags the tie rod member (4) with the rear portion (6) thereof approaching to said connecting body (3).

18. The device (1) according to the preceding claim, wherein said connecting body (3) is either connectable with, or is an accessory of said modular piece of furniture, particularly a plug or a foot.

19. A modular shelving comprising a plurality of mutually connectable components (2), and one or more interconnection devices (1) according to any preceding claim.
